# EUROPEAN PATENT SPECIFICATION

(11) **EP 1 098 809 B1**
(45) Date of publication and mention of the grant of the patent: **12.03.2003**
(21) Application number: 99953322.7
(22) Date of filing: 28.05.1999
(51) Int. Cl.: B62D 37/02, B60K 11/08

(54) **INSTALLATIONS USING LOW ENERGY FLOWS FOR THE IMPROVEMENT OF VEHICLE PERFORMANCE**
ANORDNUNG ZUR VERBESSERUNG DES VERHALTENS EINES FAHRZEUGES DURCH STRÖMUNGSANPASSUNG
INSTALLATIONS UTILISANT DES ECOULEMENTS DE FAIBLE ENERGIE POUR AMELIORER LA PUISSANCE DE VEHICULES

(30) Priority: 28.05.1998 GB 9811503
(43) Date of publication of application: 16.05.2001
(73) Proprietor: Townend, Lionel, Henry, Hawkley, Near Liss, Hampshire GU33 6NS (GB)
(72) Inventor: Townend, Lionel, Henry, Hawkley, Near Liss, Hampshire GU33 6NS (GB)
(74) Representative: Harrison Goddard Foote
(86) International application number: GB9901701
(87) International publication number: WO99061300

(56) References cited:
- EP-A- 0 282 590
- FR-A- 1 592 473
- FR-A- 2 517 273

## Description

This invention relates to installations for controlling fluid dynamic drag of a moving object such as a road or other vehicle, and/or unwanted forces and/or moments acting thereon.

With regard to drag, the rearward facing parts of a moving object such as a road vehicle are subject to the effects of so-called "base flows" which often exert significant base drag(s) which resist the motion of the vehicle. For a vehicle, base drag(s) can result in significant penalties in fuel consumption and/or may limit acceleration and/or maximum speed.

It is known that base drag can be reduced if low energy airflow and/or other gases are bled into the base flow. Bleed flows are available from various sources, for example, the exhaust gases, the air discharged by the radiator(s) or other cooling system(s), the air discharged by air conditioners, and/or the airflow from wheels and wheel arches. The flow bled into the base is not intended to form a high energy jet and its momentum contribution can be small. Its effect is to allow the formation of a gaseous "boattail" and it thereby simulates a long streamlined tail, but without the extra physical length and mass that a structural extension to the existing tail would involve. This effect manifests itself as a rise in the pressures acting on the base regions of the vehicle, that is, a reduction in the suctions which account for the drag force(s) acting on the base region(s).

The vehicle described in FR-A-2517273 has conduits through which air flows are conducted from a region of low energy or other airflow to a region of the outer surface of the vehicle. The rolling moments and/or pitching moments are reduced by these conducted airflows.

However, there is no teaching or suggestion in FR-A-2517273 that these airflows be bled from orifices provided in the region of the wings or wheel arches or bonnet of the vehicle as proposed by the present invention.

It is an object of this invention to apply the principle of bleed to the control, principally reduction, of base drag. It is a further object of the invention to apply the principle of bleed to the control, principally reduction, of other forces such as upforce or sideforce (and/or associated moments) by the use of low energy flow for lateral bleed and variants thereof, for example, installations in which the bleed is not intended to be entirely lateral. Such other forces and moments are likely to occur in crosswinds and/or for example gusts.

In one aspect the invention provides a method of controlling stability and/or fluid dynamic drag of a vehicle subject to an airflow passing over the vehicle when in motion the method comprising providing one or more conduits and/or connected spaces through which air and/or gas(es) are conducted from a region of low energy or other airflow to a region of the outer surface of the vehicle that is subject as a consequence of the airflow flowing over the vehicle during motion to suctions or reduced pressure that exert yawing, rolling and/or pitching moments on the vehicle and providing orifices or other apertures through which the air and/or gas(es) from the conduit or conduits are bled into the airflow flowing over the vehicle in the region of the outer surface of the vehicle where suction and/or reduced pressure is present wherein the orifices are provided in the region of the front wheel arches and/or wings and/or bonnet of the vehicle.

In another aspect the invention provides a vehicle having one or more conduits and/or connected spaces through which air and/or gas(es) are conducted from a region of low energy or other airflow to a region of the outer surface of the vehicle that is subject as a consequence of the airflow flowing over the vehicle during motion to suctions or reduced pressure that exert yawing, rolling and/or pitching moments on the vehicle and orifices or other apertures through which the air and/or gas(es) from the conduit or conduits are bled into the airflow flowing over the vehicle in the region of the outer surface of the vehicle where suction and/or reduced pressure is present wherein the orifices are provided in the region of the front wheel arches and/or wings and/or bonnet of the vehicle.

The manner in which crosswinds act on a vehicle tends to vary with yaw angle. As yaw angle increases sideforce increases at least initially but, beyond a certain value of yaw angle, the flow on the leeward side is likely to separate from the vehicle surface with likely reductions in side force and yawing moment, but often with a rise in drag - it is also possible to incur lift or upforce due to yaw. With lateral bleed, the occurrence of separation can be provoked by lateral bleed and/or associated detail surface design such as a recessed or raised or protruberent region at which separation may more readily occur at smaller yaw angles and/or the residual suction of the separated flow can be reduced by the lateral bleed and with it (for example) the upforce and/or pitching moment due to yaw - effects on drag are not easily predicted.

Upforce due to yaw arises because the flow impinging on a car side and front in yaw is necessarily diverted along the windward side, around the leeside, downwards (to flow beneath the car), or upwards (to flow around the corner of the wheelarch and over the bonnet and/or windscreen). The usual result is a heavy sideforce due to leeside suctions (especially at the front and hence an out-of-wind yawing moment), together with significant suctions on the upper surfaces which thus experience an upforce-due-to-yaw. Taken together, these combine to give a tendency for the vehicle to veer off course at a time when the aerodynamics may cause the vehicle to understeer as a consequence of the front tyres exerting less download on the road.

Lateral bleed, i.e. the bleeding of air from and/or over the vehicle surfaces initially at least in a generally transverse direction relative to the local vehicle surface. Frequently this will be in a generally sidewards direction relative to the longitudinal axis of the vehicle. Lateral bleed is here regarded as an aerodynamic alternative, or possibly as complementary, to structural shaping and geometric techniques. The intention of lateral bleed is to provide a technique which with the possible exception of associated detail surface design as mentioned above avoids geometric changes to shaping already selected and to some extent dictated by unavoidable features such as front wheels, wheelarch fairings, and the requirements for crumple zones and impact protection.

Low energy air is air that has performed work or has been processed whether this process is desired, e.g. air that has been passed through a radiator, or undesired such as disrupted movement of air flow that may occur for example around and inside wheel cavities. Whether low energy air is to be used for the purpose of base drag relief or for such purposes as upforce or sideforce reduction, it may well be inefficient to deenergise air specifically for that purpose. In general, low energy air should be taken from locations where it already exists (e.g. downstream of radiators, inside wheel cavities or from the boundary layers around the vehicle body) - it should then be released 1. from, through or near the base plane(s) or rear wall(s) of the vehicle (if its purpose is to reduce base drag), or 2. from, through or near the panels generally in the foremost half of the vehicle, for example in the region of and/or ahead of the front wheels and/or bonnet (if its purpose is to reduce the sideforces or upforces and their associated moments resulting from crosswinds) or from other regions of the vehicle such as the doors, pillars or rear parts such as rear doors or rear wheel cavities. Where low energy air is not conveniently located, it may still be desirable to use lateral bleed even if it now produces or increases the drag as a consequence of using a tortuous or long supply circuit for low energy air, or as a consequence of using high energy air which is conveniently located but needs to be retarded for lateral bleed.

The present invention is concerned with means to achieve these ends, and with the possible additional need to provide and/or to control a certain amount of aerodynamic downforce at zero or finite yaw conditions by the appropriate design and installation of ducting or modification of existing ducting. It also concerns the integrated design of vehicles which combine some or all of these features, together with accommodation of the following considerations -
1. The aerodynamic drag of a vehicle can be substantially increased by the need to accommodate wheels, by the airflows associated with the wheels and by the airflows within the wheel cavities and around the wheel arches (where arches feature in the design of the vehicle).
2. Radiators are not always installed in aerodynamically efficient ways - they are sometimes fed with airflow which is unducted (or less than fully or adequately ducted) and thus arrives at the radiator(s) in a somewhat haphazard way, and the efflux from the radiator(s) is frequently arranged to impinge on the engine block for cooling purposes and thereafter to disperse as best it may.
3. As a result, radiators may need to be oversize in order to give adequate cooling, and both the radiator and the water carried involve an additional weight penalty.
4. In addition, the radiator efflux is usually expected to incur a drag penalty, whereas with more appropriate design, the efflux could reduce the base drag(s) of the vehicle.

It is therefore a feature of this invention that wheel flows and radiator (and other cooling or air processing) flows are considered as having the potential to be taken together as contributory components within an integrated design, and as being able to provide low energy air or gas(es) which can be used for base bleed or lateral bleed or both.

In embodiments of the present invention there may be provided:-
1. a largely or wholly internal system of conduits and/or connected spaces through which air and/or gas may be conducted from regions (such as the wheel cavities, radiators, air intakes, or regions fed from air intakes) to those regions of the vehicle which are subjected on their outer surfaces to suctions or reduced pressures as a consequence of base flows or of a crosswind or gust, and to those surfaces of the vehicle which are so shaped, so sized and so placed as to contribute most to unwanted forces and/or to yawing, pitching or rolling moment(s),
2. orifices or other apertures through which air in the wheel cavities or elsewhere can gain access to the conduits and/or connected spaces,
3. means by which subsidiary efflux flows (e.g. from vehicle air conditioners) may be received into such conduits and/or connected spaces and may, prior to or during that process or thereafter, mix with existing airflows and effluxes,
4. orifices or other apertures through which the air, gas and/or gas-air mixture(s) may be bled into selected flow region(s) such as those which are exerting suction forces and/or moments.

The above must be applied within constraints which may include the facts that, in some existing vehicles, bleed flows are already in use, and certainly, that the provision of both base bleed and lateral (or other) bleed may need to be simultaneous. For example, some existing car designs already instal radiators at or near the rear of the vehicle (for example, the Lancia Stratos as originally conceived by Bertone, and the Lamborghini Diablo). Neither the Lancia nor the Lamborghini instal the radiator in such a way as to influence the design of the lower surfaces, nor (it is believed) with the deliberate intention to influence downforce, and this invention is concerned with this additional provision, together with the fact that radiators can be mounted substantially forward of the base, thereby easing the achievement of tolerable centre of gravity positions, while still permitting base drag reduction and offering downforce control. According to one embodiment of the present invention, there is provided an air intake (or intakes) drawing air from the airflow beneath the undersurface of the vehicle, and conducting it to radiators and/or to an engine, this cooling air thereafter being conducted towards the rear of the vehicle and being bled through an appropriately designed rearward-facing panel or panels, together in some cases with such ducting or access as will permit air from within or near to the wheel cavity to be conveyed (either with or separately from the cooling air from the engine or radiator(s)) to base regions of the vehicle, there to be bled through an appropriately designed rearward facing panel or panels which may make specific provision for such a purpose, for example by incorporating baffles, or walls to direct the internal flow, and perforations suitably chosen to distribute the bleed flow effectively.

The above system can be rearranged to use air taken from the side(s) rather than the underside of the vehicle.

Embodiments of the invention will now be described by way of example with reference to the accompanying drawings in which:-
Figures 1 to 3 are schematic representations of vehicles according to the present invention showing primarily means by which vehicle drag and downforce may be modified, and
Figures 4 and 5 are schematic representations of vehicles according to the present invention showing primarily means by which lateral bleed may be used.
Figure 6 is a schematic representation of a vehicle showing location of bleed holes on a model subjected to wind tunnel testing described in Example 3.

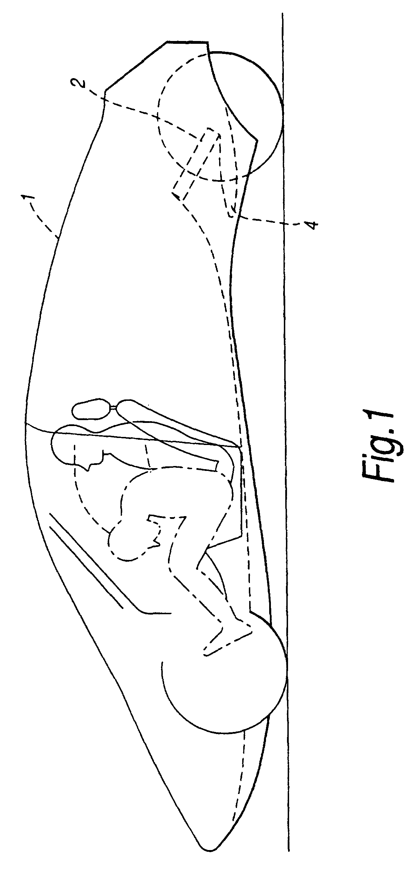

Figure 1 shows a simplified example of a vehicle in which a radiator 2 is installed forward of the rear wheel axis and is fed with air taken from the flow beneath the vehicle, the housing being of such a design as can allow some downforce due to suctions on the lower surface of the intake "cowl" 4, the intake cowl itself being located so that the aerodynamic drag of the exhaust system and/or the half-shafts and/or rear suspension is reduced by shielding due to the radiator and/or cowl.

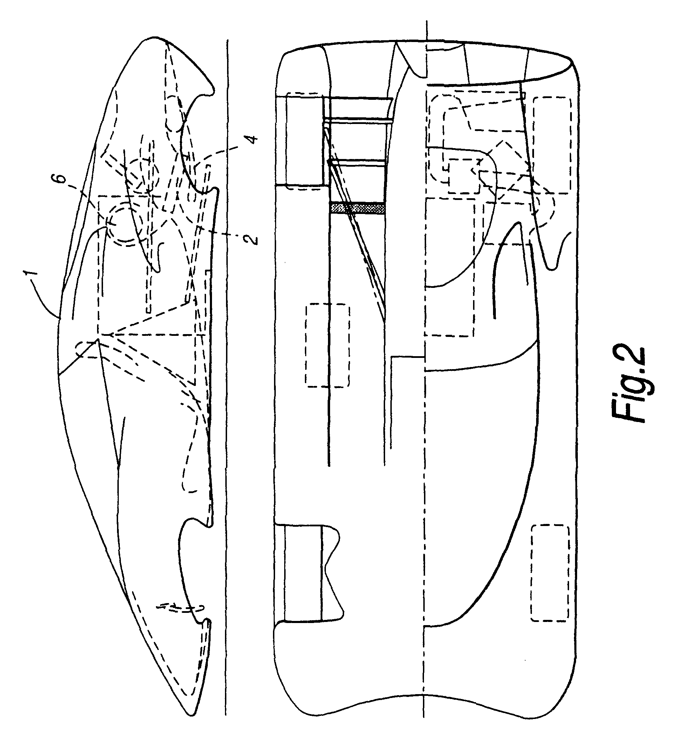

Figure 2 shows an associated radiator installation for a high performance sports vehicle, and demonstrates that the underbody intakes can also supply air to the airfilters 6 for the engine and thereby avail themselves of boundary layer control due to suction from the engine via the airfilters.

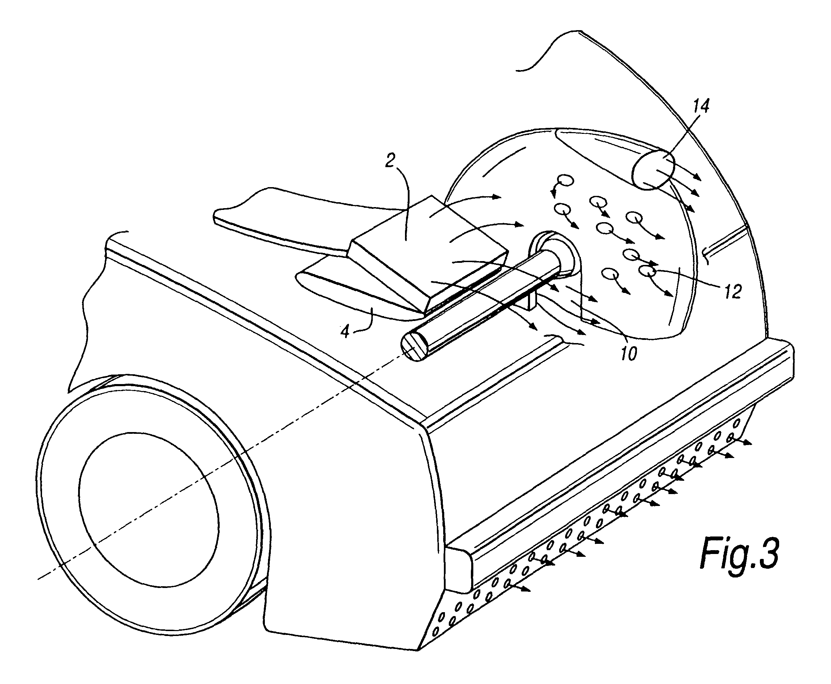

Figure 3 shows a partial diagrammatic representation of a vehicle having a similar installation to achieve low drag with provision for the use of air from the rear wheel cavities 8 through orifices 10 and/or 12 and/or 14 to enhance the supply of air to be bled from the base and/or to allow bleed conveniently from behind the rear wheels - the bleed flow can be enhanced by using appropriately designed wheelspokes as inclined blades to induce or permit a flow through the wheel, into the cavity and out through the base. The radiator may also be mounted between the rear wheel position and the base.

These arrangements of components can equally be used to supply air for lateral bleed (for example, at the rearward end of the vehicle if so desired) and the underbody or other intakes can also be used to supply or augment such air.

Since Figures 1 to 3 imply mid- or rear-radiator positions, lateral bleed at the front of a vehicle may be more easily provided from the front wheel cavities and possibly by use of internal conduits, as considered below, and/or partially or exclusively from additional intakes on the forward portions of the vehicle.

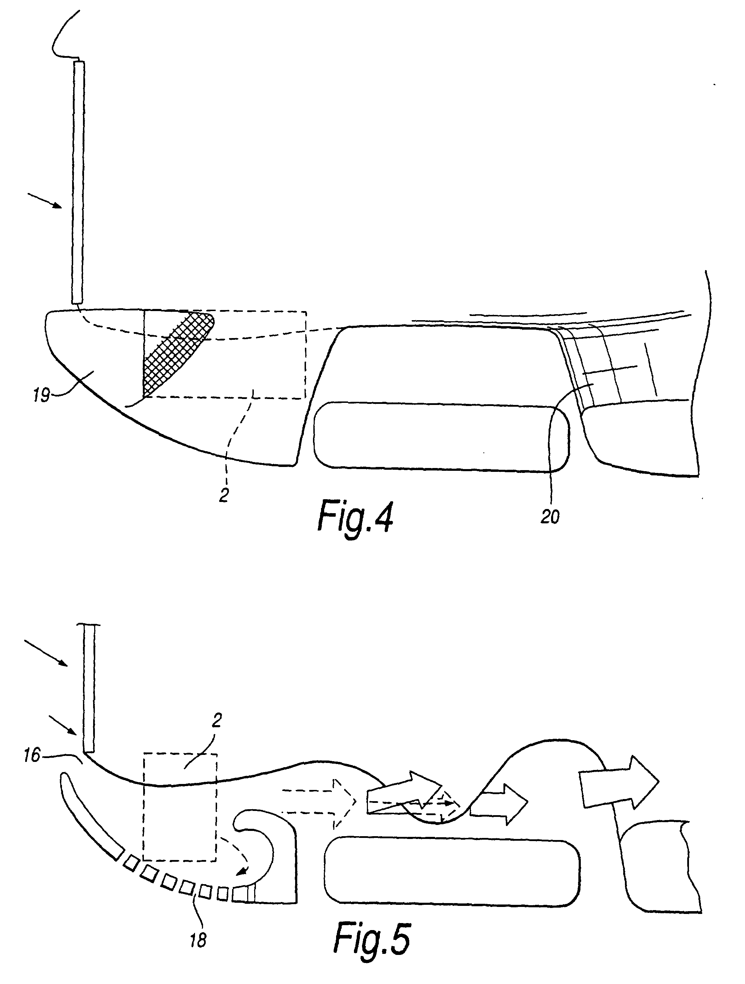

Figure 4 shows a partial diagrammatic representation of the front underside of a vehicle according to the present invention showing use of a highly radiused corner 19 having its axis roughly horizontal and allowing airflow to enter the intake for the radiator through which at least a part of the airflow captured by the intake then passes and thereafter from the radiator into the wheel cavity and a further highly radiused corner 20 to permit smooth airflow from the wheel cavity to exhaust into the flow beneath the vehicle. The flow at any point or region along this flow path may be tapped to supply lateral or other bleed to regions subject to unwanted suctions or reduced pressure, the remainder together with that part of the flow which does not pass through the radiator being used to adjust the upforce/downforce due to the cavity.

Figure 5 shows a partial diagrammatic representation of the front portion of an embodiment of the invention in which airflow entering the intake 16 mixes with air from the main radiator intake (not shown) and passes through the radiator 2 and the low energy airflow from the radiator is then conducted through orifices 18 to the outer surface of the vehicle that is subject to suction in a crosswind, which suctions are likely to extend further than the region for the orifices 18 shown.

In the form just described the oblique intakes have simply acted as yaw sensitive air intakes intended to augment the flow into the radiator 2 on the leeside of the vehicle and thence to the orifices 18 on the leeside when the vehicle is driven in the presence of a crosswind or gusts. Since it is under these conditions that suctions on the leeside front are particularly adverse the flow into intakes 16 may be thereby enhanced but it may be found preferable to arrange that the intakes 16 do not feed into the radiator 2 but are used to provide air directly into a plenum chamber and/or internal conduit from which the orifices 18 are then directly fed. In those circumstances the intakes 16 may be in the position shown in Figure 5 or may be relocated on the vehicle (e.g., on the front end or bonnet). In these locations, they are some way downstream of the bumper and can for example ingest low energy boundary layer air for at least a part of the airflow(s) which the intakes capture and thus achieve:-
1. a lower installation drag since the air ingested will have a lower momentum if it is taken in part or wholly from the boundary layer, and
2. a shorter flow path from intake 16 to orifices 18 and thus a shorter time lag in establishing the airflow required for lateral bleed in gusty conditions or when the vehicle first enters a region of steady crosswind.

Of course, wheel cavity pressures may themselves produce relatively large side forces and since the windward wheel cavity picks up some ram pressure and the leeward wheel cavity may be exposed to suction, they may contribute significantly to overall yawing moment. One approach is to crossconnect the wheel cavities so as to reduce the pressure difference between them. The wheels themselves will also support their own side forces that may need to be taken into account. Heavily spoked or perforated wheels may be used to modify airflow within the wheel cavity, by influencing the ease with which airflow gains entry to and exit from the cavities.

If on the other hand wheel cavity air is to be used as bleed, there are several ways to provide supplies of secondary airflow, two or more of the wheel cavities may be interconnected and three main options (if wheel cavity air is to be used as bleed) are as follows:-
1. A single or multiple tube cross-connecting the front wheel cavities and permitting a flow of air in either direction from one cavity to the other,
2. A minimum of two tubes, each of which draws air from one front wheel arch cavity and delivers it to a chosen region such as those parts of the bodywork on which, especially at non-zero yaw, high suctions occur (e.g. the external surfaces of the front and front wheel arch on the opposite side),
3. A minimum of three conduits in which the front wheel arch cavities are cross-connected and each acts as a reservoir of air for supply to and bleed from its own and adjacent external bodywork.

In summary,
a. secondary airflow to be used as bleed or for other purposes, may be taken from existing air intakes (especially since removal of internal or external boundary layers can improve the intake performance) or from the flows downstream of the radiators, or other existing devices, and
b. if the safety need is paramount, then bleed flow could be taken from the free stream by way of yaw sensitive intakes on either side of the front number plate (for example) or from intakes let into or mounted on the bonnet (again if need be in a yaw sensitive manner) but taking air directly from the freestream is likely to incur a drag which can no longer be partially charged to the account of another system. Thus where mass flows are sufficient, intakes should be wide and no higher than the boundary layer already developed on a surface significantly downstream of the front bumper.

The choice between the above options will depend not only on their performance under steady conditions in yaw, but on their response to gusts and their susceptibility to time lags in establishing a bleed flow in response to changing yaw conditions, together with consideration of any influence they may have on drag and for example sideforce at zero and non-zero yaw.

It is recognised in the foregoing that cooling air (which would be supplied to the radiator(s) of a liquid cooled system) could, for an air-cooled engine, be arranged to flow over the cooling fins and/or other parts of an air-cooled engine and that the air could thereafter be used for the purpose of base bleed or lateral bleed, possibly in combination with air or gas from other sources. It is also recognised that these techniques can be used individually, rather than in the particular combinations as just described. For example, the use of wheel or wheel cavity flows to provide base bleed does not depend on the simultaneous provision of radiator efflux, or of hot air from an air-cooled engine or engines. Also the radiators may be oil coolers rather than water coolers and radiators may thus occur even with aircooled engines.

In addition, since air which has been to some extent heated is specifically known to enhance the process of base bleed, such air can alternatively or additionally be provided by passing the air over the silencer and/or exhaust system of the vehicle, with or without direct contact with the engine itself and/or with subsystems such as brakes, transmission items and radiators and/or the air required to cool them. The exhaust and silencers may thus be integrated into the flow circuitry, and the engine/transmission may be deliberately enclosed in a conduit, open-ended capsule or duct which also encloses, or ducts or encapsulates at least some parts of the exhaust system(s), catalytic converter(s) and silencer(s) and other items used for exhaust disposal. This propositions is not known for mid or rear engined cars but was examined in work by Pininfarina, Fiat and Alfa-Lancia for the Italian National Research Council (1985-9) for a front engined car. Such heated air would be well suited for lateral bleed and/or base bleed.

### Example 1

A car model which was of approximately 1/5th scale designated EAS was subjected to wind tunnel tests to determine the effect of lateral bleed on upforce and other forces and moments due to yaw.

### LOTUS EAS

Tests on the EAS model used air drawn from inside the windward (front) wheel cavity to bleed from the bodywork over and in the near vicinity of the leeside (front) wheelarch thereby achieving lateral bleed by means of a self-pumping "fluidic link". This type of "fluidic link" was used because it was believed that the windward wheel cavity would act as an air intake and supply air at moderate pressure to any region experiencing a lower pressure, for example, a surface under significant suction.

The EAS model was provided with 6 inner holes (approximately 6mm dimeter) in the front left hand side wheel cavity and 19 holes (approximately 1-2mm diameter) around the right hand front wheel arch from which air from the left hand wheel cavity could be bled the holes in the wheel cavity and those around the wheel arch being cross-connected by a connecting space within the model.

At zero yaw and with zero bleed, the EAS model gave a downforce coefficient of 0.173 (and a C_{D} of 0.206).

Results for the EAS model in which the model was presented at an angle of yaw of +20° are given below:-

| TEST RUN | NO. OF HOLES OPEN | Rₑₗ X 10⁻⁶ | C_{L} | C_{D} | C_{Y} | Cₙ |
|---|---|---|---|---|---|---|
| EAS 26 | 0 | 2.08/2.08 | 0.243 | 0.674 | 0.744 | 0.247 |
| EAS 25 | 10 | 2.09/2.09 | 0.188 | 0.662 | 0.71 | 0.233 |
| Rₑₗ Reynolds number based on vehicle length | | | | | | |
| C_{L} Upforce - coefficient of lift | | | | | | |
| C_{D} Coefficient of drag | | | | | | |
| C_{Y} Coefficient of sideforce | | | | | | |
| Cₙ Coefficient of yawing moment | | | | | | |

These two sets of results establish that (1) lateral bleed can be provided by a self-pumped fluidic link fed from a front wheel cavity, and (2) lateral bleed from the bodywork around the leeward front wheel arch can substantially reduce upforce-due-to-yaw.

The results show that at zero yaw the unmodified EAS model experienced substantial downforce. At 20° yaw this changed to a substantial upforce. The use of lateral bleed from the front leeside wing showed a reduction in upforce from a C_{L} of 0.243 to a C_{L} of 0.188, i.e. a 23% reduction in upforce. The coefficient of drag was reduced by 2%, the sideforce by 3.5% and the yawing moment by 6%.

### Example 2

The EAS model was modified by the addition of a large hollow tube cross-connecting the front wheel cavities to an from which access was provided by drilling holes in the cavity walls. Force and moment measurements were first obtained for the basic model, without lateral bleed and without any flow between the cross-connected wheel cavities. Force and moment measurements were then obtained for various types of bleed. Shown below are measurements for which various forms of lateral bleed are permitted from a ram-fed plenum chamber inside the model for yaw angles of forty degrees, and they lie in two main regions (A and B). In region A, lateral bleed can change yawing moment by small amounts but can reduce the front end upforce from a coefficient of 0.5 or so to below 0.3 (and does so with little change in drag). In region B, yawing moment is only slightly changed but front upforce is reduced almost to zero and the drag increase is high.

| **ZERO PITCH, 40° YAW** | | | | | | |
|---|---|---|---|---|---|---|
| RUN No. | C_{LW} | C_{Ab} | NDCP1 | C_{Nf} | C_{Nr} | Cₙ |
| 29^{a} | +0.291 | 0.406 | 0.373 | 0.021 | 0.271 | -0.222 |
| 30^{b} | +0.297 | 0.401 | 0.367 | 0.026 | 0.271 | -0.203 |
| 31^{c} | +0.296 | 0.398 | 0.404 | 0.033 | 0.263 | -0.184 |
| 32^{d} | +0.273 | 0.405 | 0.409 | 0.010 | 0.263 | -0.176 |

| **ZERO PITCH, 40° YAW** | | | | | | |
|---|---|---|---|---|---|---|
| 35 | 0.267 | 0.394 | 0.398 | 0.008 | 0.258 | -0.195 |

| **RUNS 5 & 9, ZERO PITCH, +40° YAW** | | | | | | |
|---|---|---|---|---|---|---|
| 5 | 0.971 | 0.209 | (0.428) | 0.474 | 0.497 | -0.198 |
| 9 | 0.925 | 0.220 | (0.440) | 0.467 | 0.457 | +0.174 |
| C_{LW} Coefficient of lift | | | | | | |
| C_{Ab} Coefficient of axial drag force body | | | | | | |
| NDCP1 Position of lateral centre of pressures expressed as a percentage of body length downstream of front bumper | | | | | | |
| C_{Nf} Coefficient of upforce front axle | | | | | | |
| C_{Nr} Coefficient of upforce rear axle | | | | | | |
| Cₙ Coefficient of yawing moment | | | | | | |

| | | | | | | |
|---|---|---|---|---|---|---|
| a No crossflow | | | | | | |
| b Crossflow discs at 6mm sector opening | | | | | | |
| c Crossflow discs at 12mm sector opening | | | | | | |
| d Crossflow discs at 18mm sector opening | | | | | | |

### Example 3

A further model designated ASCC2 was also subjected to wind tunnel testing.

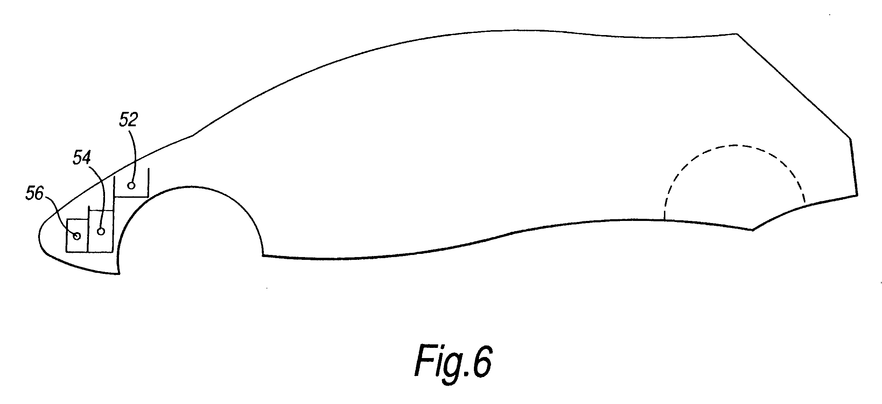

Three regions were chosen for positioning of bleed holes and are here identified as LB101, LB102 and LB103, which had 27, 40 and 40 holes (approximately 1-2mm diameter) respectively. The location of regions LB101, LB102 and LB103 was around the front wing forward of the wheel arch and around the front edge of the wheel arch and are shown in Figure 6 as (52), (54) and (56) respectively. Some data for 20 degrees of yaw are:

| | **NDCP1** | **C**_{**Nf**} | **C**_{**Nr**} | **C**_{**Ab**} | **Comments** |
|---|---|---|---|---|---|
| Run ASCC2/57 | 36.2% | -0.0216 | 0.1169 | 0.230 | ZERO BLEED |
| Run ASCC2/075 | 36.1% | -0.050 | 0.083 | 0.234 | LB 101 |
| Run ASCC2/085 | 36.9% | -0.055 | 0.094 | 0.235 | LB 102 |
| Run ASCC2/084 | 36.7% | -0.060 | 0.096 | 0.236 | LB 101 + 102 |
| Run ASCC2/093 | 37.1% | -0.054 | 0.103 | 0.236 | LB 103 |
| Run ASCC2/098 | 36.8% | -0.065 | 0.097 | 0.240 | LB 101 + 102 +103 |

These small amounts of bleed show an increase of NDCP1 of approximately 1% showing an increased stability to crosswinds.

## Claims

1. A method of controlling stability and/or fluid dynamic drag of a vehicle subject to an airflow passing over the vehicle when in motion the method comprising providing one or more conduits and/or connected spaces through which air and/or gas(es) are conducted from a region of low energy or other airflow to a region of the outer surface of the vehicle that is subject as a consequence of the airflow flowing over the vehicle during motion to suctions or reduced pressure that exert yawing, rolling and/or pitching moments on the vehicle and providing orifices (18) or other apertures through which the air and/or gas(es) from the conduit or conduits are bled into the airflow flowing over the vehicle in the region of the outer surface of the vehicle where suction and/or reduced pressure is present wherein the orifices are provided in the region of the front wheel arches and/or wings and/or bonnet of the vehicle.

2. A method according to claim 1 wherein the suctions or reduced pressure is caused by a crosswind or wind gusts.

3. A method according to claim 1 or claim 2 wherein low energy air is provided by means of inlets (16) positioned to collect air from the boundary layer airflow passing over the vehicle surfaces.

4. A method according to any of claims 1 to 3 wherein low energy air is provided by means of inlets (12) positioned to collect air from one or more of the vehicle wheel cavities.

5. A method according to any of claims 1 to 4 wherein two or more of the vehicle wheel cavities are interconnected.

6. A method according to any of claims 1 to 5 wherein low energy air is provided from the efflux of a vehicle radiator (2) and/or other cooling or air processing system.

7. A method according to any of claims 1 to 6 wherein the air or gases are bled into the airflow passing over the outer surface of the vehicle through orifices (18) provided in the foremost half of the vehicle.

8. A method according to any of claims 1 to 7 wherein orifices are provided to bleed air or gases from a rearward facing panel of the vehicle.

9. A vehicle having one or more conduits and/or connected spaces through which air and/or gas(es) are conducted from a region of low energy or other airflow to a region of the outer surface of the vehicle that is subject as a consequence of the airflow flowing over the vehicle during motion to suctions or reduced pressure that exert yawing, rolling and/or pitching moments on the vehicle and orifices or other apertures (18) through which the air and/or gas(es) from the conduit or conduits are bled into the airflow flowing over the vehicle in the region of the outer surface of the vehicle where suction and/or reduced pressure is present wherein the orifices are provided in the region of the front wheel arches and/or wings and/or bonnet.

10. A vehicle according to claim 9 wherein the suctions or reduced pressure is caused by a crosswind or wind gusts.

11. A vehicle according to claim 9 or claim 10 wherein low energy air is provided by means of inlets (16) positioned to collect air from the boundary layer airflow passing over the vehicle surfaces.

12. A vehicle according to any of claims 9 to 11 wherein low energy air is provided by means of inlets (12) positioned to collect air from one or more of the vehicle wheel cavities.

13. A vehicle according to any of claims 9 to 12 wherein two or more of the vehicle wheel cavities are interconnected.

14. A vehicle according to any of claims 9 to 13 wherein low energy air is provided from the efflux of a vehicle radiator (2) and/or other cooling or air processing system.

15. A vehicle according to any of claims 9 to 14 wherein the air or gases are bled into the airflow passing over the outer surface of the vehicle through orifices (18) provided in the foremost half of the vehicle.

16. A vehicle according to any of claims 9 to 15 wherein orifices are provided to bleed air or gases from a rearward facing panel of the vehicle.

## Patentansprüche

1. Verfahren zum Steuern/Regeln der Stabilität und/oder des aerodynamischen Widerstands eines Fahrzeugs, das einem Luftstrom ausgesetzt ist, der an dem Fahrzeug vorbei strömt, wenn sich dieses in Bewegung befindet, wobei zu dem Verfahren die Schritte gehören, ein oder mehrere Leitungen und/oder miteinander strömungsmäßig verbundene Räume bereitzustellen, durch die Luft und/oder Gas(e) aus einem Bereich niedriger Energie oder aus einer sonstigen Luftströmung zu einem Bereich der Außenfläche des Fahrzeugs geführt wird (werden), der aufgrund des während der Bewegung über das Fahrzeug strömenden Luftstroms Sogkräften oder verringertem Druck ausgesetzt ist, die auf das Fahrzeug Gier-, Roll- und/oder Nickmomente ausüben, und Austrittsöffnungen (18) oder sonstige Öffnungen bereitzustellen, durch die die Luft und/oder das (die) Gas(e) aus der Leitung oder den Leitungen in den Luftstrom eingebracht wird (werden), der über denjenigen Bereich der Fahrzeugaußenfläche strömt, in dem ein Sog und/oder ein verringerter Druck herrscht, wobei die Austrittsöffnungen in dem Bereich der Radhäuser von Vorderrädern und/oder Kotflügel und/oder der Motorhaube des Fahrzeugs vorgesehen sind.

2. Verfahren nach Anspruch 1, bei dem die Sogkräfte oder der verringerte Druck auf einen Seitenwind oder Windstöße zurückzuführen sind.

3. Verfahren nach Anspruch 1 oder Anspruch 2, bei dem Luft geringer Strömungsenergie mittels Einlassöffnungen (16) zur Verfügung gestellt wird, die geeignet positioniert sind, um Luft aus dem über die Oberflächen des Fahrzeugs strömenden Grenzschichtluftstrom einzufangen.

4. Verfahren nach einem der Ansprüche 1 bis 3, bei dem Luft geringer Energie mittels Einlassöffnungen (12) zur Verfügung gestellt wird, die geeignet positioniert sind, um Luft aus einem oder mehreren Radhaushohlräumen des Fahrzeugs aufzunehmen.

5. Verfahren nach einem der Ansprüche 1 bis 4, bei dem zwei oder mehrere der Radhaushohlräume des Fahrzeugs miteinander verbunden sind.

6. Verfahren nach einem der Ansprüche 1 bis 5, bei dem Luft geringer Energie von der von einem Kühler (2) eines Fahrzeugs austretenden Luftströmung und/oder von einem sonstigen der Kühlung dienenden oder Luft verwendenden System zur Verfügung gestellt wird.

7. Verfahren nach einem der Ansprüche 1 bis 6, bei dem die Luft oder die Gase durch überwiegend in der vorderen Hälfte des Fahrzeugs vorgesehene Öffnungen (18) in den über die Außenfläche des Fahrzeugs strömenden Luftstrom eingeleitet werden.

8. Verfahren nach einem der Ansprüche 1 bis 7, bei dem Öffnungen dazu vorgesehen sind, um Luft oder Gase aus einer nach hinten weisenden Blende abzulassen.

9. Fahrzeug, das mit einer oder mehreren Leitungen und/oder miteinander strömungsmäßig verbundenen Räumen ausgestattet ist, durch die Luft und/oder Gas(e) aus einem Bereich geringer Energie oder aus einer sonstigen Luftströmung zu einem Bereich der Außenfläche des Fahrzeugs geführt wird (werden), der aufgrund des während der Bewegung über das Fahrzeug strömenden Luftstroms Sogkräften oder verringertem Druck ausgesetzt ist, die auf das Fahrzeug Gier-, Roll- und/oder Nickmomente ausüben, und das mit Austrittsöffnungen oder sonstigen Öffnungen (18) versehen ist, durch die die Luft und/oder das (die) Gas(e) aus der Leitung oder den Leitungen in den Luftstrom eingebracht wird (werden), der über denjenigen Bereich der Fahrzeugaußenfläche strömt, in dem ein Sog und/oder ein verringerter Druck herrscht, wobei die Düsenöffnungen in dem Bereich der Radhäuser von Vorderrädern und/oder Kotflügel und/oder der Motorhaube des Fahrzeugs vorgesehen sind.

10. Fahrzeug nach Anspruch 9, bei dem die Sogkräfte oder der verringerte Druck auf einen Seitenwind oder Windstöße zurückzuführen sind.

11. Fahrzeug nach Anspruch 9 oder Anspruch 10, bei dem Luft geringer Strömungsenergie mittels Einlassöffnungen (16) zur Verfügung gestellt wird, die geeignet positioniert sind, um Luft aus dem über die Oberflächen des Fahrzeugs strömenden Grenzschichtluftstrom einzufangen.

12. Fahrzeug nach einem der Ansprüche 9 bis 11, bei dem Luft geringer Strömungsenergie mittels Einlassöffnungen (12) zur Verfügung gestellt wird, die geeignet positioniert sind, um Luft aus einem oder mehreren Hohlräumen der Radhäuser des Fahrzeugs aufzunehmen.

13. Fahrzeug nach einem der Ansprüche 9 bis 12, bei dem zwei oder mehrere der Radhaushohlräume des Fahrzeugs miteinander verbunden sind.

14. Fahrzeug nach einem der Ansprüche 9 bis 13, bei dem Luft geringer Energie von der von einem Kühler (2) eines Fahrzeugs austretenden Luftströmung und/oder von einem sonstigen der Kühlung dienenden oder Luft verwendenden System zur Verfügung gestellt wird.

15. Fahrzeug nach einem der Ansprüche 9 bis 14, bei dem die Luft oder die Gase durch überwiegend in der vorderen Hälfte des Fahrzeugs vorgesehene Öffnungen (18) in den über die Außenfläche des Fahrzeugs strömenden Luftstrom eingeleitet werden.

16. Fahrzeug nach einem der Ansprüche 9 bis 15, bei der Öffnungen dazu vorgesehen sind, um Luft oder Gase aus einer rückwärts weisenden Blende abzulassen.

## Revendications

1. Procédé pour contrôler la stabilité et/ou la traînée aérodynamique d'un véhicule soumis à un écoulement d'air passant par dessus le véhicule lorsqu'il est en mouvement, consistant à disposer un ou plusieurs conduits et/ou espaces reliés les uns aux autres à travers lesquels l'air et/ou le(s) gaz sont conduits d'une région de faible énergie ou d'un autre écoulement d'air vers une région de la surface extérieure du véhicule qui, parce que l'air s'écoule par dessus le véhicule pendant qu'il est en mouvement, est soumise à des aspirations ou à une diminution de pression qui exercent des couples de lacet, de roulis et/ou de tangage sur le véhicule, et à fournir des orifices (18) ou d'autres ouvertures à travers lesquelles l'air et/ou le(s) gaz provenant du ou des conduits sont soutirés et pénètrent dans l'écoulement d'air circulant par dessus le véhicule dans la région de la surface extérieure du véhicule où se manifeste l'aspiration et/ou la diminution de pression, dans lequel les orifices sont disposés dans la région des arceaux des roues avant et/ou des ailes et/ou du capot du véhicule.

2. Procédé selon la revendication 1, dans lequel les aspirations ou la diminution de pression sont causées par un vent latéral ou par des rafales de vent.

3. Procédé selon la revendication 1 ou la revendication 2, dans lequel l'air de faible énergie est fourni par des entrées (16) positionnées de façon à recueillir l'air provenant de la couche d'écoulement d'air limite qui passe par dessus les surfaces du véhicule.

4. Procédé selon l'une quelconque des revendications 1 à 3, dans lequel l'air de faible énergie est fourni au moyen d'entrées (12) positionnées de façon à recueillir l'air provenant d'une ou de plusieurs cavités des roues du véhicule.

5. Procédé selon l'une quelconque des revendications 1 à 4, dans lequel deux cavités ou plus des roues du véhicule sont reliées entre elles.

6. Procédé selon l'une quelconque des revendications 1 à 5, dans lequel l'air de faible énergie provient de l'effluxion d'un radiateur (2) de véhicule et/ou d'un autre système de refroidissement ou de traitement d'air.

7. Procédé selon l'une quelconque des revendications 1 à 6, dans lequel l'air ou les gaz sont soutirés et pénètrent dans l'écoulement d'air qui passe par dessus la surface extérieure du véhicule à travers les orifices (18) qui sont pratiqués dans la moitié avant du véhicule.

8. Procédé selon l'une quelconque des revendications 1 à 7, dans lequel les orifices sont disposés de façon à soutirer l'air ou les gaz depuis un panneau orienté vers l'arrière du véhicule.

9. Véhicule ayant un ou plusieurs conduits et/ou espaces reliés entre eux à travers lesquels l'air et/ou le(s) gaz sont conduits depuis une région de faible énergie ou d'un autre écoulement d'air vers une région de la surface extérieure du véhicule qui, parce que l'air s'écoule par dessus le véhicule pendant qu'il est en mouvement, est soumise à des aspirations ou à une diminution de pression qui exercent des couples de lacet, de roulis et/ou de tangage sur le véhicule, et ayant des orifices ou d'autres ouvertures (18) à travers lesquelles l'air et/ou le(s) gaz provenant du ou des conduits sont soutirés et pénètrent dans l'écoulement d'air circulant par dessus le véhicule dans la région de la surface extérieure du véhicule où se manifeste l'aspiration et/ou la diminution de pression, dans lequel les orifices sont disposés dans la région des arceaux des roues avant et/ou des ailes et/ou du capot du véhicule.

10. Véhicule selon la revendication 9, dans lequel les aspirations ou la diminution de pression sont causées par un vent latéral ou par des rafales de vent.

11. Véhicule selon la revendication 9 ou la revendication 10, dans lequel l'air de faible énergie est fourni par des entrées (16) positionnées de façon à recueillir l'air provenant de la couche d'écoulement d'air limite qui passe par dessus les surfaces du véhicule.

12. Véhicule selon l'une quelconque des revendications 9 à 11, dans lequel l'air de faible énergie est fourni au moyen d'entrées (12) positionnées de façon à recueillir l'air provenant d'une ou plusieurs cavités des roues du véhicule.

13. Véhicule selon l'une quelconque des revendications 9 à 12, dans lequel deux cavités ou plus des roues du véhicule sont reliées entre elles.

14. Véhicule selon l'une quelconque des revendications 9 à 13, dans lequel l'air de faible énergie provient de l'effluxion d'un radiateur (2) de véhicule et/ou d'un autre système de refroidissement ou de traitement d'air.

15. Véhicule selon l'une quelconque des revendications 9 à 14, dans lequel l'air ou les gaz sont soutirés et pénètrent dans l'écoulement d'air qui passe par dessus la surface extérieure du véhicule à travers les orifices (18) qui sont pratiqués dans la moitié avant du véhicule.

16. Véhicule selon l'une quelconque des revendications 9 à 15, dans lequel les orifices sont disposés de façon à soutirer l'air ou les gaz depuis un panneau orienté vers l'arrière du véhicule.
